# EUROPEAN PATENT SPECIFICATION

(11) **EP 3 885 268 B1**
(45) Date of publication and mention of the grant of the patent: **05.07.2023**
(21) Application number: 20382228.3
(22) Date of filing: 25.03.2020
(51) Int. Cl.: B64D 33/02, F02C 7/042, F02C 7/055, F02C 7/057

(54) **AIR INTAKE SYSTEM**
LUFTEINLASSSYSTEM
SYSTÈME DE PRISE D'AIR

(43) Date of publication of application: 29.09.2021
(73) Proprietor: Airbus Operations, S.L.U., 28906 Getafe (Madrid) (ES)
(72) Inventor: MOLINA PARGA, Alberto, E-28906 Getafe, Madrid (ES); CASADO MONTERO, Carlos, E-28906 Getafe, Madrid (ES); CANALEJO BAUTISTA, Juan Manuel, E-28906 Getafe, Madrid (ES)
(74) Representative: ABG Intellectual Property Law, S.L.

(56) References cited:
- EP-A1- 2 995 556
- WO-A2-2008/076471
- US-A1- 2020 079 519

## Description

### TECHNICAL FIELD OF THE INVENTION

The present invention belongs to the field of air intakes for aircraft onboard equipment or areas inside the aircraft and relates to an aircraft comprising an air intake with a barrier filter for filtering an incoming airflow and allowing cleaning such barrier filter.

### BACKGROUND OF THE INVENTION

Most of the aircraft typically incorporate a duct system for supplying airflow to onboard equipment such as engines, electronic devices, ventilation systems, etc. or areas inside the aircraft. For example, the airflow can be drawn from the atmosphere through an air intake. Such airflow may contain unwanted materials including dust, dirt, sand, insects, hairs or lint. To prevent said unwanted materials from reaching the onboard equipment or areas inside the aircraft, the conventional aircraft intake may have a barrier filter installed.

These barrier filters can be installed in a fixed position or can be actuated to be removed from the airstream when not required (for example in flight) for avoiding impact on the intake performances (minimizing pressure losses, avoiding disturbance of the airflow, etc.). However, these known barrier filters have the problem that they can become clogged and not effective until the maintenance for cleaning or replacement is carried out. Further, the clogged barrier filters may also cause that the airflow does not reach properly the relevant onboard equipment or area inside the aircraft, resulting in low performance, malfunction and/or damage of such equipment.

Furthermore, some of the air intakes have a barrier filter arranged inside the air duct, which is the duct in charge of guiding the airflow towards the onboard equipment.

There are known intakes with filters which can be self-cleaned on board, but with relatively complex arrangements to produce a reverse airflow for cleaning such filters and scavenge the unwanted material outside of the aircraft. The complex arrangements involve a plurality of moving parts, wherein each moving part requires its own actuator to have control over all positions of the arrangement.

The present invention provides an improved air intake system for an aircraft that solves the drawbacks previously mentioned using only a single actuator.

Document US2020079519 A1 discloses an air intake for aircraft onboard equipment or areas inside the aircraft, the air intake comprising a barrier filter for filtering an incoming airflow and allowing cleaning such barrier filter. This air intake comprises a flap door and a door driver for opening and closing the flap door, and also comprises an actuator for moving the movable blind between a blocking and non-blocking position.

### SUMMARY OF THE INVENTION

The present invention provides a solution for the aforementioned problems, by an air intake system according to claim 1 and an aircraft according to claim 13. In dependent claims, preferred embodiments of the invention are defined.

In a first inventive aspect, the invention provides an air intake system adapted to be installed in a first opening located on an aeronautical surface of an aircraft structure, the air intake system comprising:
- a linear actuator able to move between at least a first position, a second position and a third position,
- a closing lid being configured to be rotatably connected to the aircraft structure around a first axis,
- a first rotating strut rotatably connected to the closing lid around a second axis,
- a filter carrier being configured to be rotatably connected to the aircraft structure around a third axis,
   wherein
- the first rotating strut is further connected to a first end of the linear actuator and connected to the filter carrier,
- the closing lid comprises a first position configured to at least partially uncover the first opening and a second position configured to cover the first opening, and
- the filter carrier comprises a first position configured to at least partially uncover the first opening and a second position configured to cover the first opening;
the air intake system being configured to control the passage of airflow through the first opening by the actuation of the linear actuator such that:
- in the first position of the linear actuator, the closing lid and the filter carrier are each in their first position,
- in the second position of the linear actuator, the closing lid is in its first position and the filter carrier is in its second position, and
- in the third position of the linear actuator, the closing lid and the filter carrier are each in their second position.

The present air intake system is intended to be installed on an aircraft structure for controlling the passage of airflow through a first opening arranged on the aircraft structure. Particularly, this first opening is located on an aeronautical surface of the aircraft structure. The aeronautical surface separates the inner space of the aircraft structure from the outer space of the same. Thus, the air intake system is configured to allow or prevent the passage of airflow through the first opening towards inside of the aircraft structure. More particularly, the air intake system allows or prevents the passage of airflow towards an inlet of an air duct located in the inner space of an aircraft structure.

The air duct located inside the aircraft structure is adapted for guiding an incoming airflow to the inside of the aircraft, particularly, is adapted for guiding an incoming airflow to an onboard equipment or area inside of the aircraft structure, for example to an aircraft engine. Throughout this entire document, it will be understood that one of the ends of the air duct (the inlet) is open to the outside of the aircraft to draw air from the atmosphere, and the other end of the air duct is located inside the aircraft. In a particular embodiment, the inlet of the air intake is arranged on a surface of the aircraft and is coincident with the first opening.

The air intake is suitable for providing an incoming airflow through the first opening to the inside of the aircraft structure. In addition, when the aircraft is moving forward (e.g. in-flight phase), an external airflow circulates on the surface of the aircraft from the front part (nose) of the aircraft to the rear part (tail cone) of the aircraft. An external airflow can also circulate on the aeronautical surface of aircraft in different directions not because of the aircraft movement but due to other sources (i.e. propellers, rotors, engine jets, wind, etc.).

The air intake system comprises a linear actuator configured to move between at least a first, second and third position. These positions of the linear actuator are actuation positions that define the airflow passage states of the present air intake system. That is, according to the position taken by the linear actuator, the air intake system allows or prevents the passage of airflow through the first opening.

The air intake system comprises a closing lid that is understood as a surface structure that does not allow airflow to pass through it. The closing lid is rotatably connected to the aircraft structure by means of a first axis such that the closing lid can rotate around the first axis. The closing lid comprises a first closing lid position and a second closing lid position. In the first position, the closing lid at least partially uncovers the first opening while in the second position the closing lid covers the first opening. Thus, the closing lid passes from one position to another through its rotation around the first axis, this rotation being driven by the linear actuator.

The air intake system also comprises a first rotating strut that is understood as an elongated structure. The first rotating strut is rotatably connected to the closing lid around a second axis and is further connected to a first end of the linear actuator. Thus, the first rotating strut rotates around the second axis because of the action of the linear actuator.

The air intake further comprises a carrier filter that is understood as a support structure that houses or supports a filter, this filter being such that it allows the passage of airflow through it. The filter carrier is rotatably connected to the aircraft structure around a third axis such that the filter carrier rotates around said third axis. The filter carrier comprises a first filter carrier position and a second filter carrier position. In this first position, the filter carrier at least partially uncovers the first opening while in the second position the filter carrier covers the first opening. Thus, the filter carrier passes from one position to another position through its rotation around the third axis, this rotation being also driven by the actuation of the linear actuator.

The filter carrier is further connected to the first rotating strut. Thus, the first rotating strut links the actuation of the linear actuator with the rotational movement of the closing lid and the filter carrier. That is, this first rotating strut is understood as a linking component between the linear actuator and the closing lid and filter carrier.

Therefore, the actuation of the linear actuator causes the rotation of the first rotating strut and consequently the sequential rotation of the closing lid and the filter carrier respectively.

For each actuation position of the linear actuator, the closing lid and the filter carrier are in a determined position. In the first position of the linear actuator, the closing lid is in the first closing lid position and the filter carrier is in the first filter carrier position. That is, in this first position of the linear actuator both the closing lid and the filter carrier at least partially uncover the first opening allowing the passage of airflow through the first opening. This first position of the linear actuator is understood as a bypass position wherein the air intake system allows the free passage of airflow through the first opening towards inside the aircraft structure.

In the second position of the linear actuator, the closing lid is in the first closing lid position and the filter carrier is in the second filter carrier position. That is, in this second position of the linear actuator, the closing lid at least partially uncovers the first opening and the filter carrier covers the first opening, allowing the filtering of the airflow passing through the first opening. This second position of the linear actuator is understood as a filtering position wherein the air intake system allows the airflow entering the aircraft structure, through the first opening, being filtered by means of the filter comprised on the filter carrier. Moreover, in this filtering position, the filter comprised on the filter carrier filters materials such as sand and dust from the incoming airflow. This filtering position is preferably used on ground or in-flight at low altitudes when the filtering is needed, or to avoid foreign object damage and/or to minimize the impact on the external aerodynamic performance of the aircraft, i.e. drag.

In the third position of the linear actuator, the closing lid is in the second closing lid position and the filter carrier is in the second filter carrier position. That is, in this third position of the linear actuator both the closing lid and the filter carrier cover the first opening preventing the passage of airflow towards inside the aircraft structure. This third position of the linear actuator is understood as a closed position wherein the air intake system prevents the passage of airflow through the first opening towards inside the aircraft structure.

Thus, the air intake system advantageously allows regulating the passage of airflow through the first opening by the actuation of the linear actuator between the bypass position, filtering position and closed position.

The present air intake system allows to provide at least the three mentioned positions with the actuation of a single linear actuator compared with the state of the art wherein several independent actuators are needed, one per degree of freedom of the system, to perform these mentioned positions. That is, the linear actuator is configured to actuate in the air intake system so that at least three positions are reached sequentially. Therefore, the present invention provides an improved and simplified air intake system that regulates the passage of airflow towards inside the aircraft structure.

Through this document two airflows are defined, an incoming airflow and an external airflow. The incoming airflow will be understood as the airflow that goes inward the air duct so that when the air intake system is in the filtering position, the incoming airflow is filtered passing through the filter. Whereas when the air intake system is in the bypass position, the incoming airflow goes inward the air duct without being filtered. On the other hand, the external airflow will be understood as the airflow that goes along the external surface of an aircraft structure (for example in flight). So that, when the air intake system is in the cleaning position, the external airflow goes through the filter in a reverse direction (compared with the filtering direction when the air intake system is in the filtering position) drawing out the unwanted material retained in the filter.

The linear actuator can be expanded or retracted between at least the first position, second position and third positions. The expansion and retraction of the linear actuator are understood as any lengthening or shorting linear movement of the same.

In a particular embodiment, the linear actuator is configured to be remotely operated by a control system from the outside of the aircraft when it is on ground, or from inside the aircraft when the aircraft is on ground or in-flight, for example from the cockpit.

In a particular embodiment, the linear actuator comprises a first end and a second end. In a more particular embodiment, the first rotating strut is connected to the first end of the linear actuator while the second end of the linear actuator is configured to be rotatably connected to the aircraft structure.

In a particular embodiment, the linear actuator comprises a fourth position wherein the filter carrier comprises a filter, wherein
- the filter carrier comprises a second opening,
- the filter is rotatably connected to the filter carrier around a fourth axis,
- the filter comprises a first filter position covering the second opening and a second filter position at least partially uncovering the second opening,
- in the fourth position of the linear actuator, the closing lid and the filter carrier are each in their second position and the filter is in the second filter position.

In this particular embodiment, the filter carrier comprises a second opening that can be completely covered with a filter, this filter being rotatably connected to the filter carrier around a fourth axis. Particularly, the filter comprises a first filter position where the filter covers the second opening of the filter carrier and a second filter position where the filter at least partially uncovers the second opening of the filter carrier. Thus, in this fourth position of the linear actuator, the closing lid is in the second closing lid position, the filter carrier is in the second filter carrier position, and the filter is in the second filter position preventing the passage of external airflow through the first opening and cleaning the filter. That is, both the closing lid and the filter carrier cover the first opening and the filter uncovers the second opening. Even though the filter uncovers the second opening, the closing lid positioned in the second closing lid position prevents the passage of external airflow towards the inside of the aircraft structure through the first opening. This fourth position of the linear actuator is understood as a cleaning position where the air intake system allows cleaning the filter.

The filter has a plurality of pores, allowing the external airflow to pass through it as an incoming airflow, but preventing particles in suspension such as dust, dirt, sand, pollen, mould, bacteria, insects or lint, from penetrating inside the aircraft (e.g. in the intake air duct). Advantageously, such a filter is designed to retain such unwanted materials with a specific efficiency, thus preventing such unwanted material from damaging onboard equipment components or impinging an area inside the aircraft. Further, the filter allows the clean incoming airflow (airflow without unwanted materials) passing through the filter towards inside the aircraft structure, thus achieving the desired function in the onboard equipment and/or in the area inside the aircraft, i.e. ventilation, conditioning.

Advantageously, thanks to the capability of self-cleaning of the filter, there is no need to ensure aircraft performance with unwanted material accumulated cycle after cycle until the end of its life cycle, since the filter can be easily cleaned every flight cycle, thus allowing to reduce weight and size of the barrier filter, minimizing also its impact on performance.

In a more particular embodiment, the filter is rotatably connected to the filter carrier so that when the filter is in the second filter position, the filter is partially arranged in the outer space of the aircraft structure, that is, outside the aircraft structure. Given that the filter can rotate towards outside the aircraft structure, the external airflow flowing in the outer space of the aircraft structure and on the surface of this aircraft structure penetrates the filter in a direction that allows the filter to be cleaned.

Furthermore, the filter is also designed with a specific capacity to accumulate unwanted materials without affecting significantly on the intake performances during a certain period. However, eventually, the filter of the air intake system advantageously can be self-cleaned thanks to its rotation until the second filter position. In this sense, an external airflow arriving on the filter goes through one side of the filter in a reverse direction (compared with the filtering direction when the air intake system is in the filtering position) and causes the unwanted material retained in the filter to be released through the other side. This self-cleaning of the filter is preferably performed in flight. However, the self-cleaning of the filter can be also performed if an external airflow already exists not because of the aircraft movement but from other external sources (i.e. propellers, rotors, wind, etc.).

In a particular embodiment, the first rotating strut is connected to the filter carrier by means of the connection of this first rotating strut to the filter.

In a particular embodiment, the air intake system comprises a shaft and an extension strut wherein the first end of the linear actuator is rotatably connected to the first rotating strut such that:
- the shaft is fixedly connected to the first rotating strut, this shaft being coaxial with the second axis,
- the extension strut is rotatably connected to the first end of the linear actuator and is fixedly connected to the shaft.

The combination of the above shaft and the extension strut together with the linear actuator defines a mechanism, particularly, a crank, adapted to transmit the force of the linear actuator to at least the first rotating strut.

In a particular embodiment, the air intake system further comprises a second rotating strut fixedly connected to the shaft and further connected to the filter carrier. In addition, the second rotating strut may be fixedly connected to the shaft and the filter carrier through the filter. In a more particular embodiment, the second rotating strut is symmetrically arranged to the first rotating strut with respect to the linear actuator. This configuration of an air intake system with two rotating struts provides greater stability in the sequence movement of the components during linear actuator actuation. Additionally, the symmetric configuration of the rotating struts implies a smaller dimensioning of the air intake system components.

In a particular embodiment, the first rotating strut is rotatably connected to the filter carrier by means of a third strut, this third strut being a compressible strut. The third strut is understood as an elongated structure that can be retracted by a compression force over a predetermined limit. This third strut is rotatably connected to the first rotating strut and rotatably connected to the filter carrier at a location separated from the third axis. This third rotating strut links the movement of the first rotating strut with the rotational movement of the filter carrier. That is, this third strut is understood as a linking component between the first rotating strut and the filter carrier when the compression force is not over the predetermined limit. According to an embodiment, the compression force overcomes a predetermined limit of the third strut because the filter carrier has the movement limited in the second position and the linear actuator increases the extension compressing the third strut. This compression results in the movement of the opening lid between the first position to the second position.

In a particular embodiment, the first axis and the third axis are substantially parallel to each other, preferably coaxial with each other. Advantageously, when the first axis and the third axis are coaxial the number of components can be reduced because some of said components are shared by the two rotating elements.

In a particular embodiment, the closing lid comprises first retaining means configured to retain the closing lid in its first position; wherein a retaining force of the first retaining means is limited by a predetermined first value. The first retaining means keep or retain the closing lid in its first position preventing the closing lid from covering the first opening. These retaining means have a first retaining force that is upper limited by a predetermined first value. That is, the retaining force of the first retaining means opposes the actuation force of the linear actuator preventing the rotation of the closing lid when the first predetermined value is not exceeded. Therefore, the first retaining means, advantageously, prevent the closing lid to pass from the first closing lid position to the second closing lid position.

In a particular embodiment, the filter comprises second retaining means configured to retain the filter in first filter position; wherein a retaining force of the second retaining means is limited by a predetermined second value. The second retaining means keep or retain the filter covering the second opening. These retaining means have a second retaining force that is upper limited by a predetermined second value. That is, the retaining force of the second retaining means opposes the actuation force of the linear actuator preventing the rotation of the filter when the second predetermined value is not exceeded. Therefore, the second retaining means prevent the filter to pass from the first filter position to the second filter position.

In a more particular embodiment, the second predetermined value of the second retaining force is greater than the first predetermined value of the first retaining force. Advantageously, the actuation of the linear actuator gets the movement of the closing lid, filter carrier and filter sequentially.

In a more particular embodiment, at least the compressible strut comprises third retaining means configured to retain the third strut in an extended position; wherein a retaining force of the third retaining means is limited by a predetermined third value. The third retaining means keep or retain the third strut extended.. That is, the retaining force of the third retaining means opposes the actuation force of the linear actuator preventing the retraction of the third strut when the predetermined third value is not exceeded. Therefore, the third retaining means prevent the third strut to pass from an extended state to a retracted state. A compressible strut would be understood as a strut comprising a fixed portion and a sliding portion with respect to the fixed portion so that the motion of the sliding portion provides the extension and the retraction of the strut.

In a particular embodiment, the first retaining means, the second retaining means, the third retaining means or, any combination of them comprise a spring. Advantageously, the spring is preloaded with a force higher than a predetermined value corresponding to said retaining force.

In another particular embodiment, the first retaining means, the second retaining means, the third retaining means or, any combination of them are friction means. Advantageously, the friction force is higher than a predetermined value corresponding to said retaining force. For example, for the first retaining means as friction means, a resistance element is located around the first axis that must be overcome to set the closing lid in motion with respect to the first axis that is in contact. In this sense, when the actuation force of the linear actuator overcomes the force resisting the rotation motion of the closing lid around the first axis, the closing lid rotates around the first axis from the first closing lid position to the second closing lid position. Until the force resisting the relative motion of the closing lid and the first axis is overcome by the actuation of the linear actuator, the retaining means prevent the rotational movements of the closing lid around the first axis. This example applies mutatis mutandis to the filter, the second retaining means as friction means and the fourth axis. On the other hand, for the third retaining means as friction means, a resistance element is located between the fixed portion and the sliding portion of the compressible strut that must be overcome to set the sliding portion of the strut in motion with respect to the fixed portion. In this sense, when the actuation force of the linear actuator overcomes the force resisting the retraction of the strut, the sliding portion of the strut moves towards inside the fixed portion thus retracting the strut. Until the force resisting the retraction of the strut is overcome by the actuation of the linear actuator, the retaining means prevents the retraction of the struts.

In a more particular embodiment, both spring(s) and friction means can be used as retaining means in the present air intake system.

In a particular embodiment, the air intake system further comprises a first mechanical stop at a first location and a second mechanical stop at a second location, these mechanical stops being configured to respectively limit the rotation of the closing lid and the rotation of the filter carrier between the first location and the second location. The mechanical stops are understood as structures to which the closing lid and the filter carrier abut. That is, the mechanical stop prevents the closing lid or the filter carrier to go beyond this mechanical stop, that is, their rotation is limited due to the presence of this mechanical stop. This also applies to the second mechanical stop.

In a more particular embodiment, the first and second mechanical stops are configured to be located at the inlet of an air duct arranged inside the aircraft structure.

A force exerted by the linear actuator on the rotating struts and the compressible struts causes the filter carrier to rotate around the third axis until the filtering position is reached, the rotation of the filter carrier being limited by the second mechanical stop. The second mechanical stop prevents the filter carrier from further rotating outwards the aircraft structure. This also applies to the closing lid which rotation is limited by the second mechanical stop when the air intake system passes from the filtering position to the closed position. On the other hand, a further force exerted in the opposite direction by the linear actuator on the rotating struts and the compressible struts causes the closing lid to rotate back the first axis until the filtering position is reached, the rotation of the closing lid being limited by the first mechanical stop. This first mechanical stop prevents the closing lid from further rotating inwards the aircraft structure when the air intake system passes from the closed position to the filtering position. This also applies to the filter carrier which rotation is limited by the first mechanical stop when the air intake system passes from the filtering position to the bypass position.

In a second inventive aspect, the invention provides an aircraft comprising an aircraft structure with an aeronautical surface comprising a first opening and an air intake system according to the first inventive aspect.

In a particular embodiment, the aircraft further comprises an intake air duct through which the incoming airflow passing through the first opening circulates. This incoming airflow can be an external airflow that is already filtered by a filter of the air intake system.

In a particular embodiment, the filter of the air intake system is positioned at a second filter position towards outside the aircraft so that an external airflow goes through the filter in a reverse direction. That is, an external airflow arriving on the filter goes through one side of the filter in a reverse direction (compared with the filtering direction when the air intake system is in the filtering position) and causes the unwanted material retained in the filter to be released through the other side. This position of the filter corresponds to the self-cleaning of the filter.

In a particular embodiment, the intake air duct comprises an air duct opening that is located between the first mechanical stop and the second mechanical stop.

All the features described in this specification (including the claims, description and drawings) and/or all the steps of the described method can be combined in any combination, except for combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a cross sectional view of an air intake system in a bypass position according to an embodiment of the present invention.
- Figure 2: This figure shows a cross sectional view of an air intake system in a filtering position according to an embodiment of the present invention.
- Figure 3: This figure shows a cross sectional view of an air intake system in a closed position according to an embodiment of the present invention.
- Figure 4: This figure shows a cross sectional view of an air intake system in a cleaning position according to an embodiment of the present invention.
- Figure 5: This figure shows a perspective view of an air intake system in a filtering position according to an embodiment of the present invention.
- Figure 6: This figure shows a perspective view of an air intake system in a closed position according to an embodiment of the present invention.
- Figure 7: This figure shows a perspective view of a portion of an air intake system shown on figure 6.
- Figure 8: This figure shows an aircraft according to an embodiment of the present invention.

### DETAILED DESCRIPTION OF THE INVENTION

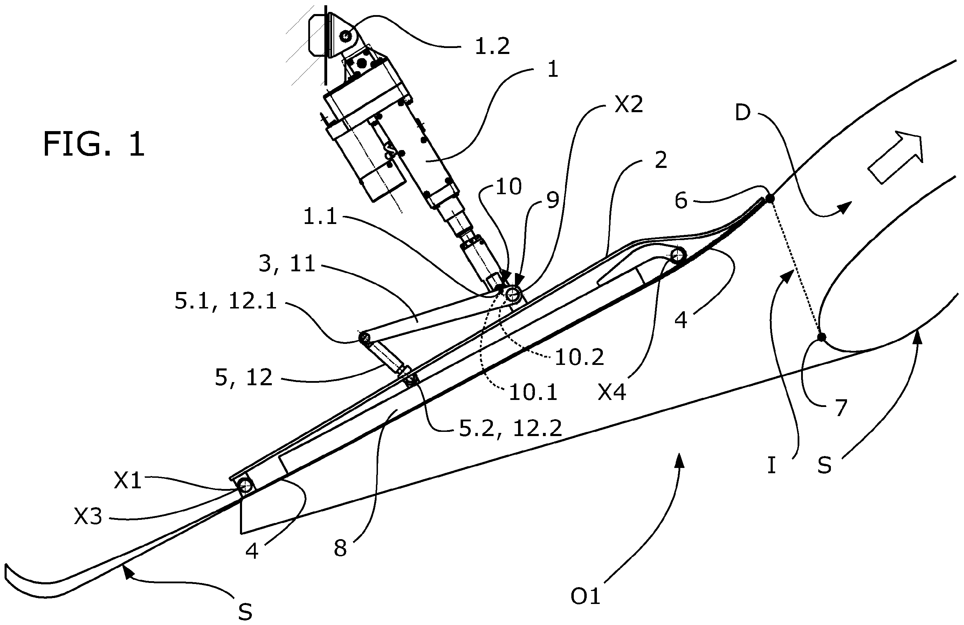

Figures 1-4 show an air intake system according to the present invention arranged in an aircraft structure, this aircraft structure comprising an aeronautical surface (S) with a first opening (O1). This aeronautical surface (S) separates the inside of the aircraft structure from the outside of the same. Particularly, the air intake system is installed in the first opening (1) to regulate the passage of an external airflow as an incoming airflow towards the inside of the aircraft structure. More particularly, the aircraft structure of an aircraft comprises an intake air duct (D) arranged inside the aircraft structure, this intake air duct (D) being connected with the first opening (O1). Thus, the present air intake system controls the passage of airflow towards an inlet (I) of the intake air duct (D).

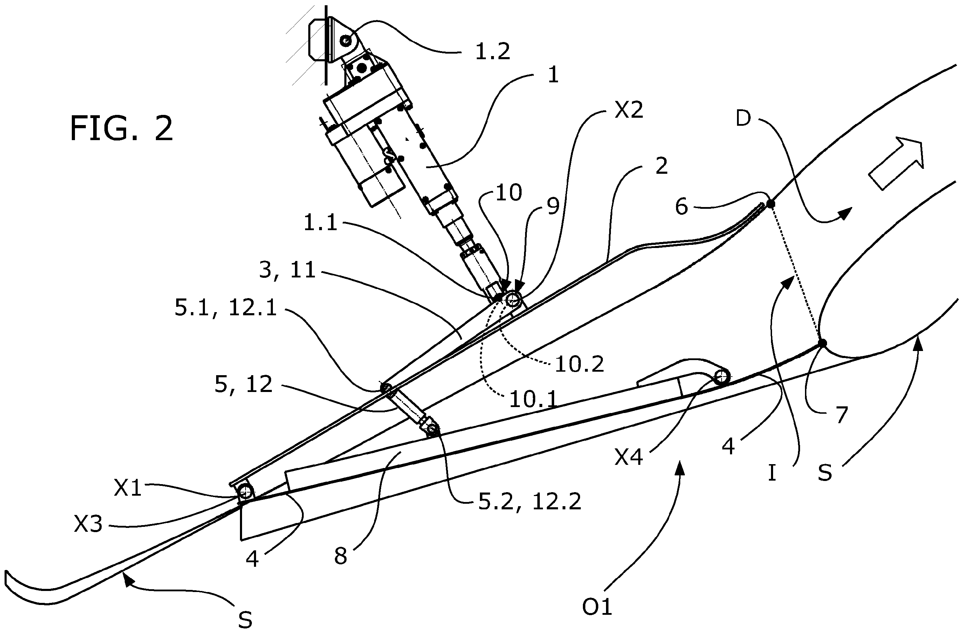

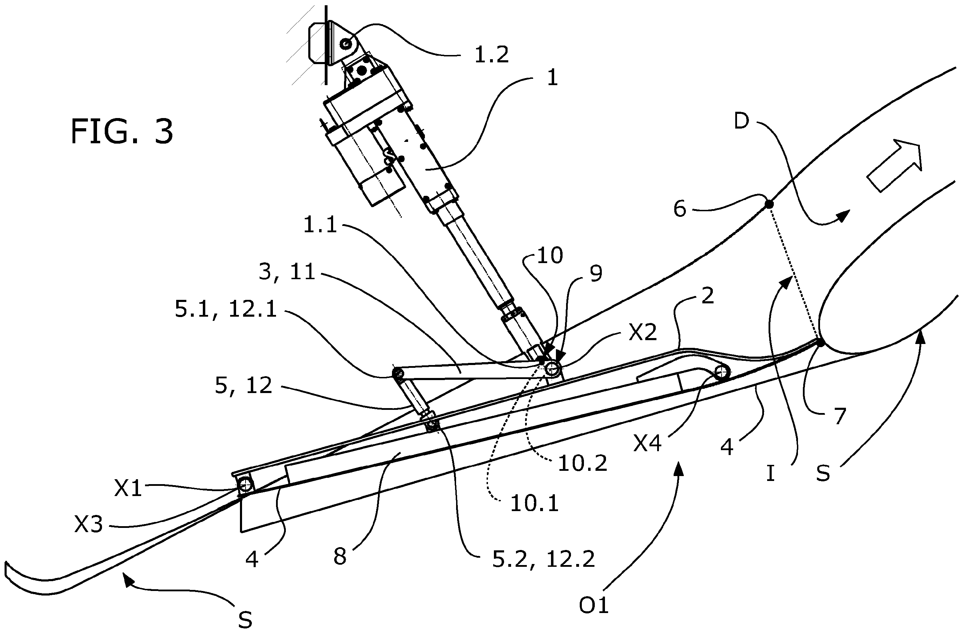

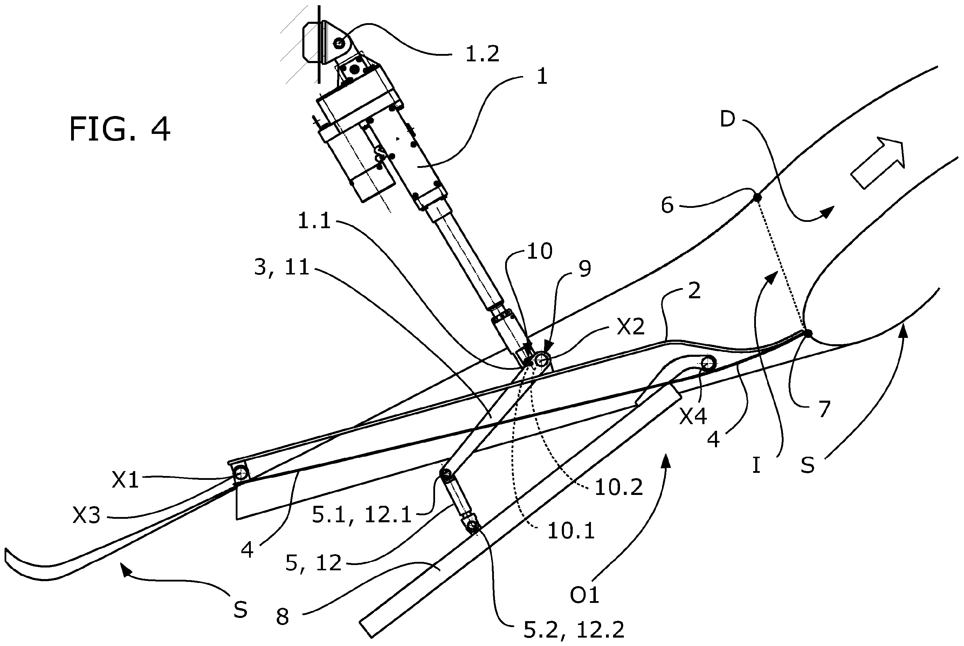

The air intake system of figures 1-4 comprises a linear actuator (1) able to move between a bypass position (shown in figure 1), a filtering position (shown in figure 2), a closed position (shown in figure 3) and a cleaning position (shown in figure 4). This linear actuator (1) is a contractible actuator that can have an extended state and a contracted state. In this example, the linear actuator (1) is a single actuator allowing the independent movements required for the transition between each of the four positions.

The air intake system further comprises a closing lid (2) rotatably connected to the aircraft structure, on the aeronautical surface (S), around a first axis (X1). The air intake system also comprises a first rotating strut (3) and a third strut (5). The first rotating strut (3) is rotatably connected to the closing lid (2) around a second axis (X2) and further connected to a first end (1.1) of the linear actuator (1). On the other hand, the third strut (5) comprises a first end (5.1) and a second end (5.2). This third strut (5) is rotatably connected to the first rotating strut (3) at the first end (5.1). The air intake system further comprises a filter carrier (4) rotatably connected to the aircraft structure, on the aeronautical surface (S), around a third axis (X3). Thus, the third strut (5) is connected to the filter carrier (4) at the second end (5.2) of this third strut (5).

The first rotating strut (3) and the third strut (5) define a hinge mechanism that links the linear actuator (1) with the closing lid (2) and the filter carrier (4). The movement of this mechanism together with the actuation of the linear actuator (1) are in charge of providing a sequential movement of the closing lid (2) and the filter carrier (4) so that the air intake system controls de passage of external airflow through the first opening (O1) as an incoming airflow to the intake air duct (D).

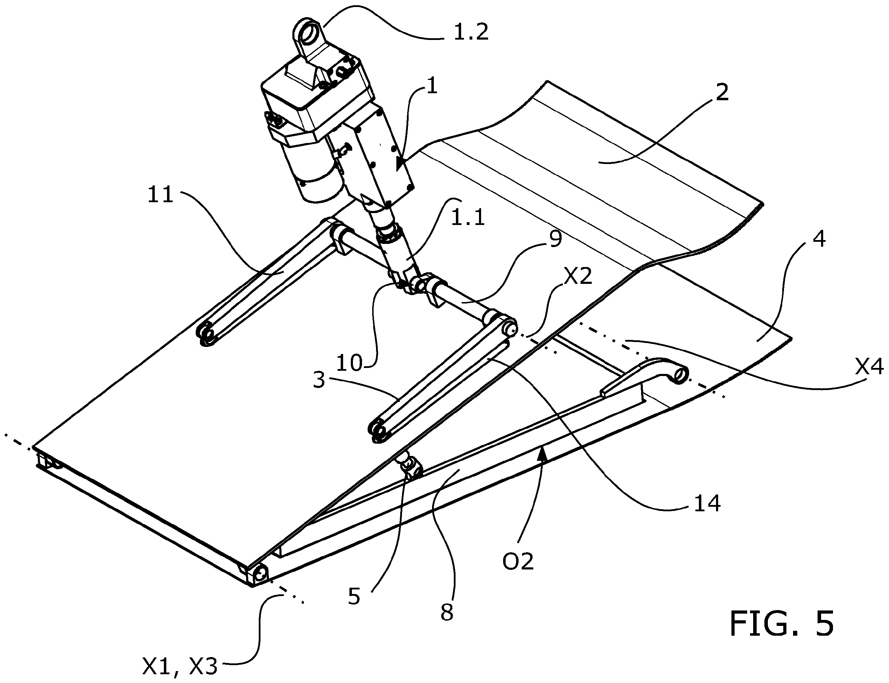

In these figures 1-4, the filter carrier (4) comprises a second opening (O2) and a filter (8) rotatably connected to the filter carrier (4) around a fourth axis (X4). Particularly, the third strut (5) is connected to the filter carrier (4) through the filter (8) (this is shown in figures 5-6). In this sense, the actuation of the linear actuator (1) allows the rotation of the filter (8) around the fourth axis (X4). Particularly, the closing lid (2) comprises two perforated slots (14) (shown on figures 5-6) through which the first rotating struts (3, 11) and the third struts (5, 12) respectively cross by means of the actuation of the linear actuator (1). For example, when the air intake system passes from the bypass position (shown in figure 1) to the filtering position (shown in figure 2) through the rotation of the first rotating struts (3, 11) around the second axis (X2) and, the third struts (5, 12) cross through the perforated slots (14) of the closing lid (2). In addition, when the air intake system passes from the filtering position (shown in figure 2) to the closed position (shown in figure 3) by means of the extension of the linear actuator (1), the third struts (5, 12) cross through the perforated slots (14) of the closing lid (2). When the air intake system passes from the closed position (shown in figure 3) to the cleaning position (shown in figure 4) by means of the further rotation of the first rotating struts (3, 11) around the second axis (X2), the third struts (5, 12) and the first rotating strut (3, 11) cross through the perforated slots (14) of the closing lid (2).

The air intake system of these figures 1-4 further comprises a shaft (9) and an extension strut (10). The shaft (9) is fixedly connected to the first rotating strut (3) and is coaxial with the second axis (X2) around which the first rotating strut (3) rotates. Besides, the extension strut (10) comprises a first end (10.1) and a second end (10.2). The first end (1.1) of the linear actuator (1) is rotatably connected to the first end (10.1) of the extension strut (10). Further, the second end (10.2) of the extension strut (10) is fixedly connected to the mentioned shaft (9) transferring the linear force exerted by the linear actuator (1) to the shaft (9) as a torque. This configuration is also shown in figures 5-7.

In a particular example (shown in figures 5-6) the air intake system further comprises a second rotating strut (11) as the first rotating strut (3), and a fourth strut (12) as the third strut (5), both previously described for the air intake system shown in figures 1-4. In particular, the second rotating strut (11) is fixedly connected to the shaft (9). The fourth strut (12) comprises a first end (12.1) and a second end (12.2), wherein the fourth strut (12) is rotatably connected to the second rotating strut (11) at its first end (12.1). Further, the fourth strut (12) is rotatably connected to the filter carrier (4) at its second end (12.2) at a location separated from the third axis (X3).

The present linear actuator (1) is configured to actuate the rotational movement of the closing lid (2), the filter carrier (4) and the filter (8) among their determined positions. Particularly, the closing lid (2) comprises a first closing lid position (shown in figures 1-2) wherein the closing lid uncovers the first opening (O1). The closing lid (2) also comprises a second closing lid position (shown in figured 3-4) wherein the closing lid (2) covers the first opening (O1). Therefore, the closing lid (2) changes position by means of its rotation around the first axis (X1).

Moreover, the carrier filter (4) comprises a first filter carrier position (shown in figure 1) wherein the carrier filter (4) uncovers the first opening (O1). The filter carrier (4) further comprises a second position (shown in figures 2-4) wherein the filter carrier (4) covers the first opening (O1). The filter carrier (4) changes position by means of its rotation around the third axis (X3).

In addition, the filter (8) comprises a first filter position (shown in figures 1-3) wherein the filter (8) covers the second opening (O2). The filter (8) also comprises a second filter position (shown in figure 4) wherein the filter (8) uncovers the second opening (O2). Therefore, the filter (8) changes position by means of its rotation around the fourth axis (X4). The fourth axis (X4) is fixed in a frame of the filter carrier (4) so that the mentioned filter positions of the filter (8) are relative to the filter carrier (4).

According to the closed and filtering positions of the air intake system (shown in figures 3 and 4 respectively), the first and third axes (X1, X3) are positioned opposite to the fourth axis (X4) with respect to the first opening (O1), so that the fourth axis (X4) is located behind the first and third axes (X1, X3) according to the flight direction of an aircraft. In this sense, the filter (8) opens outwards the aircraft structure in a reverse direction of the external airflow thereby allowing the self-cleaning of the filter (8).

In these figures 1-4, the closing lid (2) comprises a first retaining means (not shown) able to retain the closing lid (2) in the first closing lid position. The first retaining means have a retaining force that opposes the actuation force of the linear actuator (1) preventing the rotation of the closing lid (2) when a first predetermined value corresponding to said retaining force is not exceeded.

Furthermore, the filter (8) comprises second retaining means (not shown) able to retain the filter (8) in the first filter position. The second retaining means have a force that opposes the actuation force of the linear actuator (1) preventing the rotation of the filter (8) when a second predetermined value corresponding to said retaining force is not exceeded.

In a particular example, the second predetermined value of the second retaining force is greater than the first predetermined value of the first retaining force.

Particularly, in the embodiment of these figures 1-4, the first and second retaining means comprise friction elements.

The air intake system of these figures 1-4 further shows a first mechanical stop (6) and a second mechanical stop (7). These mechanical stops (6, 7) are located at the inlet (I) of the intake air duct (D). These mechanical stops (6, 7) limit the rotational movement of the closing lid (2) and the filter carrier (4) between two locations.

Figure 1 shows an air intake system in a bypass position, that is, with the linear actuator (1) in the first position. Particularly, both the closing lid (2) and the filter carrier (4) uncover the first opening (O1) allowing the free passage of airflow towards inside the intake air duct (D). In this position, the first mechanical stop (6) prevents the closing lid (2) and the filter carrier (4) continue to rotate inwards the aircraft structure. Furthermore, the contracted state of the linear actuator (1) together with the first retaining means of the closing lid (2) keep the closing lid (2) in the first closing lid position.

Figure 2 shows an air intake system in a filtering position, that is, with the linear actuator (1) in the second position. Particularly, the closing lid (2) is in the first closing lid position and the filter carrier (4) covers the first opening (O1) with the filter (8) in the first filter position. Thus, in this filtering position, the incoming airflow towards inside the intake air duct (D) is filtered when passes through the filter (8). In this position, the first mechanical stop (6) prevents the closing lid (2) continue to rotate inwards the aircraft structure, while the second mechanical stop (7) prevents the filter carrier (4) continue to rotate towards outside the aircraft structure.

For passing from the bypass position (figure 1) to the filtering position (figure 2), the linear actuator (1) applies an actuation force that rotates the first rotating strut (3) around the second axis (2) so that the filter carrier (4) passes to cover the first opening (O1) by its rotation around the third axis (X3). Further, the first retaining means retain the closing lid (2) in its first position preventing the closing lid (2) from covering the first opening (O1) while the linear actuator (1) is exerting a pushing force on this closing lid (2). This retention is due to the actuation force exerted by the linear actuator (1) is lower than the first predetermined value of the retaining force of said first retaining means allowing to transmit the movement to the filter carrier (4) while the closing lid (2) keeps the position uncovering the first opening (O1). In addition, the second retaining means retain the filter (8) covering the second opening (O2) allowing that the force applied by the rotating strut (3) is transmitted to the filter carrier (4) while the filter (8) keeps the position uncovering the second opening (O2). This second retention is due to the actuation force exerted by the linear actuator (1) is lower than the second predetermined value of the retaining force of said second retaining means.

In this embodiment, a line connecting the first end (1.1) of the linear actuator (1) and the second end (1.2) of the linear actuator (1), when prolonged, intersects the rotating strut (3) or a prolongation of the same. This condition ensures that the movement of the rotating strut (3) is in the correct direction.

Figure 3 shows an air intake system in a closed position, that is, with the linear actuator (1) in the third position. Particularly, both the closing lid (2) and the filter carrier (4) cover the first opening (O1) with the filter (8) in the first filter position. Thus, in this closed position, the air intake system prevents the external airflow goes inwards the intake air duct (D). In this position, the second mechanical stop (7) prevents the closing lid (2) and the filter carrier (4) continue rotating outwards the aircraft structure.

For passing from the filtering position (figure 2) to the closed position (figure 3), the linear actuator (1) is extended applying an actuation force for pushing the closing lid (2) to the second closing lid position where the closing lid (2) covers the first opening (O1). This change of position of the closing lid (2) is due to the actuation force exerted by the linear actuator (1) is greater than the retaining force of the first retaining means comprised in the closing lid (2). That is, the actuation force of the linear actuator (1) overcomes the retaining force of the first retaining means thus allowing the rotation of the closing lid (2) until its rotation stops with the second mechanical stop (7). Further, the second retaining means retain the filter (8) covering the second opening (O2) since the actuation force exerted by the linear actuator (1) is lower than the second predetermined value of the retaining force of said second retaining means.

Figure 4 shows an air intake system in a cleaning position, that is, with the linear actuator (1) in the fourth position. Particularly, both the closing lid (2) and the filter carrier (4) cover the first opening (O1) with the filter (8) in the second filter position. Thus, in this cleaning position, the filter (8) is cleaned. In this position, the second mechanical stop (7) prevents the closing lid (2) and the filter carrier (4) continue rotating outwards the aircraft structure.

For passing from the closed position (figure 3) to the cleaning position (figure 4), the linear actuator (1) applies an actuation force that makes the first rotating strut (3) rotates around the second axis (X2) so that the filter (8) passes to uncover the second opening (O2) by its rotation around the fourth axis (X4). The rotation of the filter (8) to its second filter position is due to the actuation force exerted by the linear actuator (1) being greater than the retaining force of the second retaining means comprised in the filter (8). That is, the actuation force of the linear actuator (1) overcomes the retaining force of the second retaining means thus allowing the rotation of the filter (8) outwards the first opening (O1). Additionally, in this embodiment, the second mechanical stop (7) impedes any outward displacement of the filter carrier (4) when the actuation force is exerted on the filter (8), thus maintaining the filter carrier (4) in the second position.

Therefore, the linear actuator (1) is configured to apply different actuation force values that are transmitted to the rest of elements of the air intake system to sequentially pass from a bypass position to a filtering position, closed position, and cleaning position, and vice versa.

The air intake system shown in figures 5-6 comprises third struts (5, 12) that are compressible struts, particularly telescopic struts. The compressible struts (5, 12) have an expanded position and a retracted position. In addition, these compressible struts (5, 12) comprise third retaining means in the form of elastically deformable elements according to an embodiment or, comprising friction elements intended for opposing to the compressing force or, a combination of both elements, that retains these struts (5, 12) in the expanded position. The third retaining means have a retaining force that opposes the actuation force of the linear actuator (1) preventing the retraction of the third struts (5, 12) when a third predetermined value corresponding to said retaining force is not exceeded. In this configuration of compressible third struts (5, 12), in the bypass position and in the filtering position, the third struts (5, 12) are in an expanded position while in the closed position and cleaning position these third struts (5, 12) are in the retracted position. In this example, the linear actuator (1) exerts a force against the closing lid (2) compressing the compressible third struts (5, 12) while the filter carrier (4) is kept in its second position. This force is only absorbed by the elements of the compressible third struts (5, 12) opposing to said force resulting in the movement of the closing lid (2) from the first position to the second position. For this configuration shown in figures 5-6 of the air intake system, instead of first retaining means in the closing lid (2), the system comprises third retaining means comprised in the compressible struts. These compressible struts may be actuated in some alternative embodiments.

According to a further embodiment, to pass from the bypass position (not shown) to the filtering position (shown in figure 5) when the third struts (5, 12) comprises elastically deformable elements, the linear actuator (1) applies an actuation force that rotates the first rotating strut (3) around the second axis (X2) so that the filter carrier (4) passes to the second filter carrier position by its rotation around the third axis (X3). This change of position of the filter carrier (4) is due to the actuation of the linear actuator (1) and the retention of the third retaining means. That is, the third retaining means keep the third struts (5, 12) extended while the linear actuator (1) exerts the actuation force.

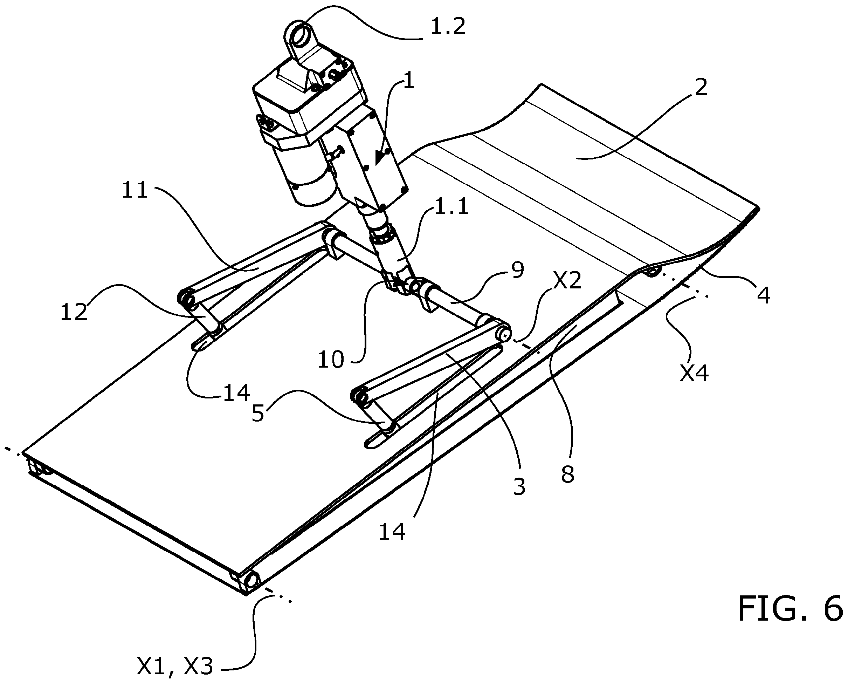

On the other hand, to pass from the filtering position (figure 5) to the closed position (figure 6), the linear actuator (1) applies an actuation force that pushes the closing lid (2) to the second closing lid position by means of its rotation around the first axis (X1) while the third struts (5, 12) are retracted. This change of position of the closing lid (2) is due to the actuation force exerted by the linear actuator (1) being greater than the retaining force of the third retaining means comprised in third struts (5, 12). That is, the actuation force of the linear actuator (1) overcomes the retaining force of the third retaining means thus allowing the rotation of the closing lid (2) from the first closing lid position to the second closing lid position.

According to the above embodiment wherein the air intake system comprises third compressible struts (5, 12), the third retaining means are elastically deformable elements such as a spring.

Particularly, figure 5 shows the air intake system in the filtering position with the compressible struts (5, 12) in an extended position. On the other hand, figure 6 shows the air intake system in the closed position with the compressible struts (5, 12) in a contracted position.

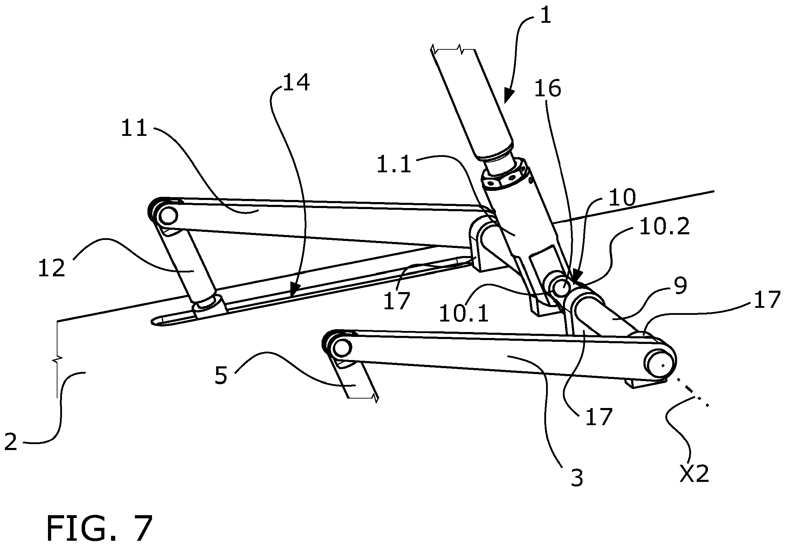

Figure 7 shows a portion of the air intake system of figure 6 wherein the connection between the linear actuator (1), the extension strut (10) and the shaft (9) can be observed in detail.

Particularly, the first end (1.1) of the linear actuator (1) comprises, according to this embodiment, a pin (16) housed in a cylindrical perforation of the extension strut (10) at its first end (10.1) resulting in a rotatable connection between the linear actuator (1) and the first end (10.1) of said extension strut (10).

The extension strut (10) comprises a second end (10.2) through which the extension strut (10) is fixedly connected to the shaft (9). Taking the second axis (X2) as a reference, the radial direction of the extension strut (10) is not aligned with the direction defined by the first end (1.1) and the second end (1.2) of the linear actuator (1). As a result, in operative manner, the acting force of the linear actuator (1) at the first end (10.1) of the extension strut (10) is passing through the second axis (X2) causing a torque on the shaft (9) that is transmitted to the rotating strut (3) and the third strut (5) sequentially. If the shaft (9) comprises two rotating struts (3, 11) and two third struts (5, 11) then the torque transmitted from the linear actuator (1) to the shaft (9) by means of the extension strut (10), or extension struts if two of them exist, is also transmitted to the first rotating struts (3, 11) and the third struts (5, 11) sequentially.

Figure 7 further shows fixing means (17) through which the shaft (9) is rotatably fastened to the closing lid (2).

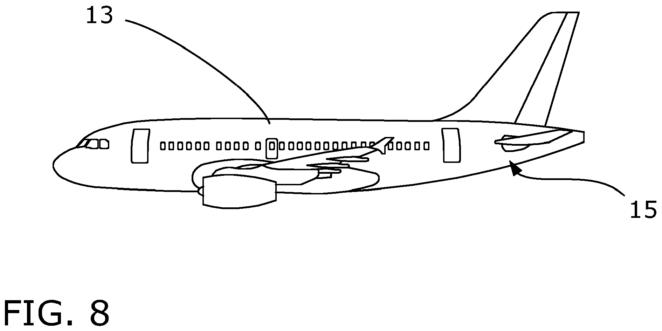

Figure 8 shows an aircraft (13) comprising a tail cone (15) as an aircraft structure with an aeronautical surface (S). This aircraft (13) comprises an air intake system (not shown) according to any of the previous embodiments.

## Claims

1. An air intake system adapted to be installed in a first opening (O1) located on an aeronautical surface (S) of an aircraft structure, the air intake system comprising:
- a linear actuator (1) able to move between at least a first position, a second position and a third position,
- a closing lid (2) being configured to be rotatably connected to the aircraft structure around a first axis (X1),
- a first rotating strut (3) rotatably connected to the closing lid (2) around a second axis (X2),
- a filter carrier (4) being configured to be rotatably connected to the aircraft structure around a third axis (X3),
wherein
- the first rotating strut (3) is further connected to a first end (1.1) of the linear actuator (1) and connected to the filter carrier (4),
- the closing lid (2) comprises a first position configured to at least partially uncover the first opening (O1) and a second position configured to cover the first opening (O1), and
- the filter carrier comprises a first position configured to at least partially uncover the first opening (O1) and a second position configured to cover the first opening (O1);
the air intake system being configured to control the passage of airflow through the first opening (O1) by the actuation of the linear actuator (1) such that:
- in the first position of the linear actuator (1), the closing lid (2) and the filter carrier (4) are each in their first position,
- in the second position of the linear actuator (1), the closing lid (2) is in its first position and the filter carrier (4) is in its second position, and
- in the third position of the linear actuator (1), the closing lid (2) and the filter carrier (4) are each in their second position.

2. The air intake system according to claim 1 wherein the linear actuator (1) comprises a fourth position wherein the filter carrier (4) comprises a filter (8), wherein
- the filter carrier (4) comprises a second opening (O2),
- the filter (8) is rotatably connected to the filter carrier (4) around a fourth axis (X4),
- the filter (8) comprises a first filter position covering the second opening (O2) and a second filter position at least partially uncovering the second opening (O2),
- in the fourth position of the linear actuator (1), the closing lid (2) and the filter carrier (4) are each in their second position and the filter (8) is in the second filter position.

3. The air intake system according to any of preceding claims further comprising a shaft (9) and an extension strut (10) wherein the first end (1.1) of the linear actuator (1) is rotatably connected to the first rotating strut (3) such that:
- the shaft (9) is fixedly connected to the first rotating strut (3), this shaft (9) being coaxial with the second axis (X2),
- the extension strut (10) is rotatably connected to the first end (1.1) of the linear actuator (1) and is fixedly connected to the shaft (9).

4. The air intake system according to claim 3, further comprising a second rotating strut (11) fixedly connected to the shaft (9) and further connected to the filter carrier (4).

5. The air intake system according to any of the preceding claims wherein the first rotating strut (3) is rotatably connected to the filter carrier (4) by means of a third strut (5), this third strut (5) being a compressible strut.

6. The air intake system according to any one of the preceding claims wherein the first axis (X1) and the third axis (X3) are substantially parallel to each other, preferably coaxial with each other.

7. The air intake system according to any of preceding claims, wherein the closing lid (2) comprises first retaining means configured to retain the closing lid (2) in its first position; wherein a retaining force of the first retaining means is limited by a predetermined first value.

8. The air intake system according to claim 2 and any of preceding claims, wherein the filter (8) comprises second retaining means configured to retain the filter (8) in first filter position; wherein a retaining force of the second retaining means is limited by a predetermined second value.

9. The air intake system according to claim 5 and any of preceding claims, wherein at least the compressible strut (5) comprises third retaining means configured to retain the third strut (5) in an extended position; wherein a retaining force of the third retaining means is limited by a predetermined third value.

10. The air intake system according to any of claims 7 to 9, wherein
- the first retaining means,
- the second retaining means,
- the third retaining means or,
- any combination of them
comprise a spring.

11. The air intake system according to any of claims 7 to 10, wherein
- the first retaining means,
- the second retaining means,
- the third retaining means or,
- any combination of them
are friction means.

12. The air intake system according to any of previous claims further comprising a first mechanical stop (6) at a first location and a second mechanical stop (7) at a second location, these mechanical stops (6, 7) being configured to limit the rotation of the closing lid (2) and the rotation of the filter carrier (4) between the first location and the second location.

13. Aircraft (13) comprising an aircraft structure with an aeronautical surface (S) comprising a first opening (O1) and an air intake system according to any of the preceding claims.

14. Aircraft (13) according to claim 13, wherein the filter (8) of the air intake system is positioned at a second filter position towards outside the aircraft (13) so that an external airflow goes through the filter (8) in a reverse direction.

15. Aircraft (13) according to claim 13 and 14, wherein the intake air duct (D) comprises an air duct opening (O1) that is located between the first mechanical stop (6) and the second mechanical stop (7).

## Patentansprüche

1. Luftansaugsystem, das dazu ausgelegt ist, in einer ersten Öffnung (O1) installiert zu sein, die sich auf einer aeronautischen Fläche (S) einer Luftfahrzeugstruktur befindet, wobei das Luftansaugsystem Folgendes umfasst:
- einen Linearaktuator (1), der in der Lage ist, sich zwischen mindestens einer ersten Position, einer zweiten Position und einer dritten Position zu bewegen,
- einen Verschlussdeckel (2), der dazu ausgestaltet ist, mit der Luftfahrzeugstruktur um eine erste Achse (X1) drehbar verbunden zu sein,
- eine erste drehende Strebe (3), die mit dem Verschlussdeckel (2) um eine zweite Achse (X2) drehbar verbunden ist,
- einen Filterträger (4), der dazu ausgestaltet ist, mit der Luftfahrzeugstruktur um eine dritte Achse (X3) drehbar verbunden zu sein,
wobei
- die erste drehende Strebe (3) ferner mit einem ersten Ende (1.1) des Linearaktuators (1) verbunden und mit dem Filterträger (4) verbunden ist,
- der Verschlussdeckel (2) eine erste Position, die dazu ausgestaltet ist, die erste Öffnung (O1) zumindest teilweise freizugeben, und eine zweite Position, die dazu ausgestaltet ist, die erste Öffnung (O1) abzudecken, umfasst, und
- der Filterträger eine erste Position, die dazu ausgestaltet ist, die erste Öffnung (O1) zumindest teilweise freizugeben, und eine zweite Position, die dazu ausgestaltet ist, die erste Öffnung (O1) abzudecken, umfasst;
wobei das Luftansaugsystem dazu ausgestaltet ist, den Durchgang eines Luftstroms durch die erste Öffnung (O1) durch die Betätigung des Linearaktuators (1) derart zu steuern, dass:
- in der ersten Position des Linearaktuators (1) sich der Verschlussdeckel (2) und der Filterträger (4) jeweils in ihrer ersten Position befinden,
- in der zweiten Position des Linearaktuators (1) sich der Verschlussdeckel (2) in seiner ersten Position befindet und sich der Filterträger (4) in seiner zweiten Position befindet, und
- in der dritten Position des Linearaktuators (1) sich der Verschlussdeckel (2) und der Filterträger (4) jeweils in ihrer zweiten Position befinden.

2. Luftansaugsystem nach Anspruch 1, wobei der Linearaktuator (1) eine vierte Position umfasst, wobei der Filterträger (4) einen Filter (8) umfasst, wobei
- der Filterträger (4) eine zweite Öffnung (O2) umfasst,
- der Filter (8) mit dem Filterträger (4) um eine vierte Achse (X4) drehbar verbunden ist,
- der Filter (8) eine erste Filterposition, die die zweite Öffnung (O2) abdeckt, und eine zweite Filterposition, die die zweite Öffnung (O2) zumindest teilweise freigibt, umfasst,
- in der vierten Position des Linearaktuators (1) sich der Verschlussdeckel (2) und der Filterträger (4) jeweils in ihrer zweiten Position befinden und sich der Filter (8) in der zweiten Filterposition befindet.

3. Luftansaugsystem nach einem der vorhergehenden Ansprüche, ferner umfassend eine Welle (9) und eine Verlängerungsstrebe (10), wobei das erste Ende (1.1) des Linearaktuators (1) mit der ersten drehenden Strebe (3) derart drehbar verbunden ist, dass:
- die Welle (9) fest mit der ersten drehenden Strebe (3) verbunden ist, wobei die Welle (9) mit der zweiten Achse (X2) koaxial ist,
- die Verlängerungsstrebe (10) mit dem ersten Ende (1.1) des Linearaktuators (1) drehbar verbunden und mit der Welle (9) fest verbunden ist.

4. Luftansaugsystem nach Anspruch 3, ferner umfassend eine zweite drehende Strebe (11), die mit der Welle (9) fest verbunden und ferner mit dem Filterträger (4) verbunden ist.

5. Luftansaugsystem nach einem der vorhergehenden Ansprüche, wobei die erste drehende Strebe (3) mit dem Filterträger (4) mittels einer dritten Strebe (5) drehbar verbunden ist, wobei die dritte Strebe (5) eine kompressible Strebe ist.

6. Luftansaugsystem nach einem der vorhergehenden Ansprüche, wobei die erste Achse (X1) und die dritte Achse (X3) im Wesentlichen parallel zueinander, vorzugsweise koaxial miteinander, sind.

7. Luftansaugsystem nach einem der vorhergehenden Ansprüche, wobei der Verschlussdeckel (2) erste Haltemittel umfasst, die dazu ausgestaltet sind, den Verschlussdeckel (2) in seiner ersten Position zu halten; wobei eine Haltekraft der ersten Haltemittel durch einen vorbestimmten ersten Wert begrenzt ist.

8. Luftansaugsystem nach Anspruch 2 und einem der vorhergehenden Ansprüche, wobei der Filter (8) zweite Haltemittel umfasst, die dazu ausgestaltet sind, den Filter (8) in der ersten Filterposition zu halten; wobei eine Haltekraft der zweiten Haltemittel durch einen vorbestimmten zweiten Wert begrenzt ist.

9. Luftansaugsystem nach Anspruch 5 und einem der vorhergehenden Ansprüche, wobei mindestens die kompressible Strebe (5) dritte Haltemittel umfasst, die dazu ausgestaltet sind, die dritte Strebe (5) in einer verlängerten Position zu halten; wobei eine Haltekraft der dritten Haltemittel durch einen vorbestimmten dritten Wert begrenzt ist.

10. Luftansaugsystem nach einem der Ansprüche 7 bis 9, wobei
- die ersten Haltemittel,
- die zweiten Haltemittel,
- die dritten Haltemittel, oder
- eine beliebige Kombination aus diesen
eine Feder umfassen.

11. Luftansaugsystem nach einem der Ansprüche 7 bis 10, wobei
- die ersten Haltemittel,
- die zweiten Haltemittel,
- die dritten Haltemittel, oder
- eine beliebige Kombination aus diesen
Reibungsmittel sind.

12. Luftansaugsystem nach einem der vorhergehenden Ansprüche, ferner umfassend einen ersten mechanischen Anschlag (6) an einer ersten Lage und einen zweiten mechanischen Anschlag (7) an einer zweiten Lage, wobei die mechanischen Anschläge (6, 7) dazu ausgestaltet sind, die Drehung des Verschlussdeckels (2) und die Drehung des Filterträgers (4) zwischen der ersten Lage und der zweiten Lage zu begrenzen.

13. Luftfahrzeug (13), umfassend eine Luftfahrzeugstruktur mit einer aeronautischen Fläche (S) umfassend eine erste Öffnung (O1) und ein Luftansaugsystem nach einem der vorhergehenden Ansprüche.

14. Luftfahrzeug (13) nach Anspruch 13, wobei der Filter (8) des Luftansaugsystems an einer zweiten Filterposition hin zu einer Außenseite des Luftfahrzeugs (13) positioniert ist, so dass eine externe Luftströmung durch den Filter (8) in einer umgekehrten Richtung geht.

15. Luftfahrzeug (13) nach Anspruch 13 und 14, wobei der Ansaugluftkanal (D) eine Luftkanalöffnung (O1) umfasst, die sich zwischen dem ersten mechanischen Anschlag (6) und dem zweiten mechanischen Anschlag (7) befindet.

## Revendications

1. Système de prise d'air conçu pour être installé dans une première ouverture (01) située sur une surface aéronautique (S) d'une structure d'aéronef, le système de prise d'air comprenant :
un actionneur linéaire (1) pouvant se déplacer entre au moins une première position, une deuxième position et une troisième position,
un couvercle de fermeture (2) conçu pour être relié de manière rotative à la structure d'aéronef autour d'un premier axe (X1),
une première jambe rotative (3) reliée de manière rotative au couvercle de fermeture (2) autour d'un deuxième axe (X2),
un porte-filtre (4) conçu pour être relié de manière rotative à la structure d'aéronef autour d'un troisième axe (X3),
la première jambe rotative (3) étant en outre reliée à une première extrémité (1.1) de l'actionneur linéaire (1) et reliée au porte-filtre (4),
le couvercle de fermeture (2) comprenant une première position conçue pour découvrir au moins partiellement la première ouverture (01) et une deuxième position conçue pour couvrir la première ouverture (01), et
le porte-filtre comprenant une première position conçue pour découvrir au moins partiellement la première ouverture (01) et une deuxième position conçue pour couvrir la première ouverture (01) ;
le système de prise d'air étant conçu pour commander le passage de flux d'air à travers la première ouverture (01) par l'actionnement de l'actionneur linéaire (1) de sorte que :
dans la première position de l'actionneur linéaire (1), le couvercle de fermeture (2) et le porte-filtre (4) soient chacun dans leur première position,
dans la deuxième position de l'actionneur linéaire (1), le couvercle de fermeture (2) soit dans sa première position et le porte-filtre (4) soit dans sa deuxième position, et
dans la troisième position de l'actionneur linéaire (1), le couvercle de fermeture (2) et le porte-filtre (4) soient chacun dans leur deuxième position.

2. Système de prise d'air selon la revendication 1, l'actionneur linéaire (1) comprenant une quatrième position, le porte-filtre (4) comprenant un filtre (8),
le porte-filtre (4) comprenant une seconde ouverture (O2),
le filtre (8) étant relié de manière rotative au porte-filtre (4) autour d'un quatrième axe (X4),
le filtre (8) comprenant une première position de filtre couvrant la seconde ouverture (O2) et une seconde position de filtre couvrant au moins partiellement la seconde ouverture (O2),
dans la quatrième position de l'actionneur linéaire (1), le couvercle de fermeture (2) et le porte-filtre (4) étant chacun dans leur deuxième position et le filtre (8) étant dans la seconde position de filtre.

3. Système de prise d'air selon l'une quelconque des revendications précédentes comprenant en outre un arbre (9) et une jambe d'extension (10), la première extrémité (1.1) de l'actionneur linéaire (1) étant reliée de manière rotative à la première jambe rotative (3) de sorte que :
l'arbre (9) soit relié de manière fixe à la première jambe rotative (3), cet arbre (9) étant coaxial avec le deuxième axe (X2),
la jambe d'extension (10) soit reliée de manière rotative à la première extrémité (1.1) de l'actionneur linéaire (1) et soit reliée de manière fixe à l'arbre (9).

4. Système de prise d'air selon la revendication 3, comprenant en outre une deuxième jambe rotative (11) reliée de manière fixe à l'arbre (9) et reliée au porte-filtre (4).

5. Système de prise d'air selon l'une quelconque des revendications précédentes, la première jambe rotative (3) étant reliée de manière rotative au porte-filtre (4) au moyen d'une troisième jambe (5), cette troisième jambe de force (5) étant une jambe compressible.

6. Système de prise d'air selon l'une quelconque des revendications précédentes, le premier axe (X1) et le troisième axe (X3) étant sensiblement parallèles l'un à l'autre, de préférence coaxiaux l'un par rapport à l'autre.

7. Système de prise d'air selon l'une quelconque des revendications précédentes, le couvercle de fermeture (2) comprenant un premier moyen de retenue conçu pour retenir le couvercle de fermeture (2) dans sa première position ; une force de retenue du premier moyen de retenue étant limitée par une première valeur prédéfinie.

8. Système de prise d'air selon la revendication 2 et l'une quelconque des revendications précédentes, le filtre (8) comprenant un deuxième moyen de retenue conçu pour retenir le filtre (8) dans la première position de filtre ; une force de retenue du deuxième moyen de retenue étant limitée par une deuxième valeur prédéfinie.

9. Système de prise d'air selon la revendication 5 et l'une quelconque des revendications précédentes, au moins la jambe compressible (5) comprenant un troisième moyen de retenue conçu pour retenir la troisième jambe (5) dans une position déployée ; une force de retenue du troisième moyen de retenue étant limitée par une troisième valeur prédéfinie.

10. Système de prise d'air selon l'une quelconque des revendications 7 à 9,
le premier moyen de retenue,
le deuxième moyen de retenue,
le troisième moyen de retenue ou,
toute combinaison de ces éléments comprenant un ressort.

11. Système de prise d'air selon l'une quelconque des revendications 7 à 10,
le premier moyen de retenue,
le deuxième moyen de retenue,
le troisième moyen de retenue ou,
toute combinaison de ces éléments étant un moyen de friction.

12. Système de prise d'air selon l'une quelconque des revendications précédentes, comprenant en outre une première butée mécanique (6) au niveau d'un premier emplacement et une seconde butée mécanique (7) au niveau d'un second emplacement, ces butées mécaniques (6, 7) étant conçues pour limiter la rotation du couvercle de fermeture (2) et la rotation du porte-filtre (4) entre le premier emplacement et le second emplacement.

13. Aéronef (13) comprenant une structure d'aéronef ayant une surface aéronautique (S) comprenant une première ouverture (01) et un système de prise d'air selon l'une quelconque des revendications précédentes.

14. Aéronef (13) selon la revendication 13, le filtre (8) du système de prise d'air étant positionné au niveau d'une seconde position de filtre vers l'extérieur de l'aéronef (13) de sorte qu'un flux d'air externe traverse le filtre (8) dans le sens inverse.

15. Aéronef (13) selon les revendications 13 et 14, le conduit de prise d'air (D) comprenant une ouverture de conduit d'air (01) qui est située entre la première butée mécanique (6) et la seconde butée mécanique (7).
